# EUROPÄISCHE PATENTSCHRIFT

(11) **EP 0 693 187 B1**
(45) Veröffentlichungstag und Bekanntmachung des Hinweises auf die Patenterteilung: **25.06.1997**
(21) Anmeldenummer: 94911839.2
(22) Anmeldetag: 06.04.1994
(51) Int. Cl.: G02B 6/42, G02B 6/38

(54) **KOPPLUNGSANORDNUNG**
COUPLING ARRANGEMENT
ARRANGEMENT DE COUPLAGE

(30) Priorität: 07.04.1993 DE 4311980
(43) Veröffentlichungstag der Anmeldung: 24.01.1996
(73) Patentinhaber: SIEMENS AKTIENGESELLSCHAFT, 80333 München (DE)
(72) Erfinder: LANGENWALTER, Michael, D-13587 Berlin (DE)
(86) Internationale Anmeldenummer: DE9400393
(87) Internationale Veröffentlichungsnummer: WO9423322

(56) Entgegenhaltungen:
- EP-A- 0 014 610
- GB-A- 2 143 651
- US-A- 5 044 720

## Beschreibung

Die Erfindung betrifft eine Kopplungsanordnung zum optischen Koppeln eines in einem Steckerstift verlaufenden Lichtwellenleiterendes mit einem optischen Element mit einem Kopplungskörper mit einer Axialbohrung und darin aufgenommener Hülse, in die der Steckerstift von dem ersten Hülsenende her einführbar ist, und mit einer Halterung für das optische Element.

Aus der DE-A1-37 12 295 und der EP-A1-0 447 768 sind Kopplungsanordnungen zum endseitigen optischen Koppeln eines in einem Steckerstift enthaltenen Lichwellenleiters mit einem optischen Element bekannt. Bei diesen Kopplungsanordnungen ist jeweils eine Axialbohrung fluchtend mit der Mittelachse einer Halterung für ein optisches Element ausgerichtet. Der Steckerstift ist zur Ankopplung unmittelbar in die Axialbohrung einführbar. Deshalb muß die Axialbohrung selbst hochpräzise auf den Steckerstift-Außendurchmesser abgestimmt sein, um eine spielfreie Passung zur reproduzierbar guten Ankopplung zu gewährleisten. Die Kopplungsanordnung muß dazu insgesamt aus einem temperaturbeständigen, höchst abriebfesten und verschleißfreien und damit teuren Material gefertigt sein.

Die GB-A-2 143 651 beschreibt einen Kopplungskörper mit einem Aufnahmegehäuse, in dem ein elektrooptisches Bauelement verrastbar ist, und mit einer geschlitzten Aufnahmehülse mit Rastfingern, die unmittelbar an einem Flansch eines in die Hülse eingeführten Lichtwellenleitersteckers angreifen. Ein stirnseitig aus dem Stecker austretender Lichtwellenleiter muß präzise geführt und auf das Bauelement ausgerichtet werden.

Aus der EP-A2-0 278 507 ist eine Kopplungsanordnung der eingangs genannten Art bekannt, bei der die Axialbohrung eine geschlitzte zylindrische Hülse aufnimmt, in die der Steckerstift von dem ersten Hülsenende her einführbar ist. Die Hülse ist mit ihrem zweiten Hülsenende auf einen Zwischenstift gesteckt. Die bekannte Kopplungsanordnung besteht neben der Hülse aus einer Vielzahl von Einzelteilen, die ihre Montage und Herstellung komplizieren. Die mit erheblichem Spiel in der Axialbohrung gelagerte Hülse neigt durch diese Lagerung und durch ihren Schlitz zur mechanischen Instabilität, die vor allem bei häufigen Kopplungs-Wechselspielen zu einer negativen Veränderung der Kopplungscharakteristik führen kann.

Die Aufgabe der Erfindung liegt daher in der Schaffung einer aus möglichst wenigen Einzelteilen bestehenden, einfach montierbaren Kopplungsanordnung, die reproduzierbare Ankopplungsverhältnisse eines Lichtwellenleiterendes mit einem optischen Element gewährleistet.

Diese Aufgabe wird bei einer Kopplungsanordnung der eingangs genannten Art erfindungsgemäß dadurch gelöst, daß in die Axialbohrung radial ein Anschlag hineinragt, an dem das halterungsnahe zweite Hülsenende anliegt, daß der Axialbohrungs-Querschnitt im Einführbereich kleiner als der Hülsen-Querschnitt bemessen ist und sich zum Anschlag hin bis maximal auf den Hülsen-Querschnitt erweitert und daß das die Axialbohrung umgebende Material beim Einführen der Hülse elastisch aufweitbar ist. Durch den sich vorzugsweise konisch zum Anschlag hin erweiternden Axialbohrungs-Querschnitt ist das zweite Hülsenende im wesentlichen frei von axialbohrungsseitigen Radialkräften zentriert. Das erste Hülsenende ist durch den Preßsitz in der Axialbohrung zuverlässig fixiert. Die aufweitbare Axialbohrung erlaubt ein fertigungstechnisch einfaches Einführen der Hülse unter gleichzeitiger Bildung des Preßsitzes.

Nach einer vorteilhaften Weiterbildung der Erfindung kann die Axialbohrung im Einführbereich radial nach innen gerichtete Rastnasen aufweisen, die das erste Hülsenende in Richtung auf den Anschlag mit einer Axialkraft beaufschlagen. Die axiale Verspannung bei eingesetzter Hülse erzeugt eine besonders temperatur- und langzeitstabile Kopplungscharakteristik.

Der Axialbohrung können weitgehend unabhängig von dem für den Kopplungskörper verwendeten Werkstoff gemäß einer vorteilhaften Fortbildung der Erfindung dadurch auf einfache Weise elastische Eigenschaften verliehen werden, daß das die Axialbohrung umgebende Material mindestens einen im wesentlichen axial verlaufenden Schlitz aufweist.

Die Hülse kann besonders vorteilhaft in die Axialbohrung eingebracht werden, wenn das zweite Hülsenende eine Fase aufweist.

Eine fertigungstechnisch bevorzugte Ausgestaltung der Erfindung besteht darin, daß in die Halterung ein lichtaushärtender Klebstoff einbringbar ist und daß der Kopplungskörper zumindest im Bereich des Aufnahmeraums für das zum Aushärten verwendete Licht durchlässig ist.

Ein Ausführungsbeispiel der Erfindung wird nachfolgend anhand einer Zeichnung näher erläutert. Es zeigen:
Figur 1 eine erfindungsgemäße Kopplungsanordnung im Längsschnitt und
Figur 2 eine stirnseitige Ansicht der Kopplungsanordnung gemäß Figur 1.

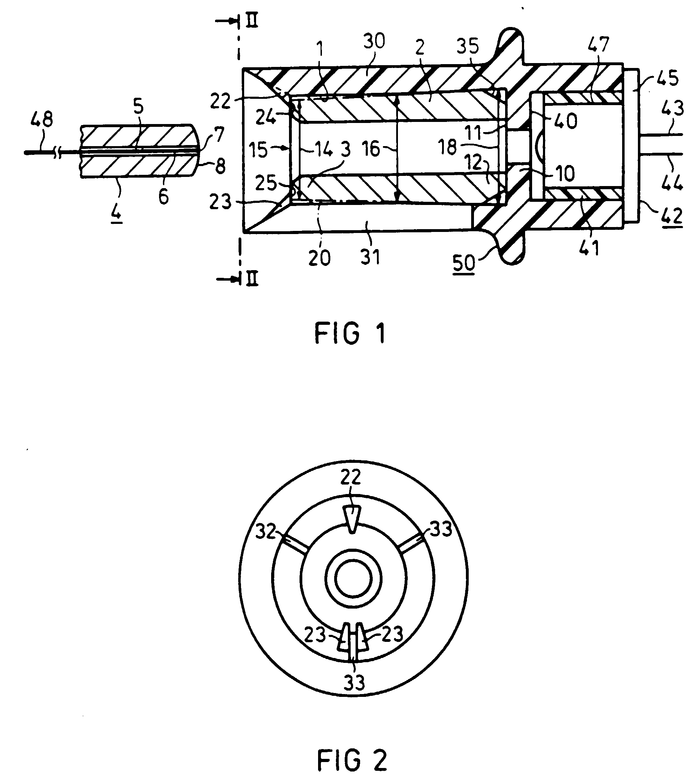

Die Kopplungsanordnung hat einen Kopplungskörper mit einer Axialbohrung 1, die eine Hülse 2 aufnimmt. Von dem ersten Hülsenende 3 her ist ein Steckerstift 4 einführbar, in dessen zentraler Bohrung 5 ein Lichtwellenleiterende 6 verläuft und der mit seiner Endfläche 7 stirnseitig mit der Stirnseite 8 des Steckerstifts 4 abschließt. In die Axialbohrung 1 ragt ein kreisringförmiger Anschlag 10 hinein, an dessen erster Seite 11 das zweite Hülsenende 12 anliegt. Im entspannten Zustand, d. h. vor Einführen der Hülse 3 in die Axialbohrung 1, ist der Axialbohrungs-Querschnitt 14 im Einführbereich 15 kleiner als der Hülsen-Querschnitt 16 (d. h. bei zylindrischer Hülse 2 kleiner als der Hülsen-Außendurchmesser). Zum Anschlag 10 hin erweitert sich der Axialbohrungs-Querschnitt 18 konisch bis auf den Querschnitt 16 der Hülse 2, so daß die Axialbohrung 1 vor dem Einführen der Hülse 2 den in Figur 1 gestrichelt angedeuteten konischen Verlauf 20 hat. Beim Einführen der Hülse 2 ist die Axialbohrung 1 elastisch aufweitbar; im Bereich des ersten Hülsenendes 3 entsteht dabei eine spielfreie Preßpassung zwischen Hülse und Axialbohrung. Die Hülse ist damit in der Axialbohrung zuverlässig zentriert und fixiert.

Im Einführbereich 15 weisen Rastnasen 22, 23 radial nach innen, die das erste Hülsenende 3 mit einer Axialkraft beaufschlagen und die Hülse 2 gegen den Anschlag 10 drücken. Die Entfernung zwischen den auf das erste Hülsenende 3 wirkenden Flächen 24, 25 der Rastnasen 22, 23 und dem Anschlag 10 ist vorzugsweise so bemessen, daß die Hülse 2 unter axialer Verspannung gehalten ist.

Um die Aufweitbarkeit der Axialbohrung 1 beim Einführen der Hülse 2 zu erhöhen, weist das die Axialbohrung 1 umgebende elastische Material 30 im wesentlichen axial verlaufende Schlitze 31 sowie 32, 33 (Figur 2) auf.

Das zweite Hülsenende 12 weist eine Fase 35 auf und ist im wesentlichen radialkräftefrei in der Axialbohrung 1 gelagert. An der zweiten Seite 40 des Anschlags 10 ist eine Halterung 41 zur Aufnahme eines elektro-optischen Elements 42 vorgesehen. Das als Laserdiode ausgebildete Element 42 hat elektrische Anschlüsse 43, 44 und ein Gehäuse 45, das durch einen in den Aufnahmeraum 41 eingebrachten lichtaushärtenden Klebstoff 47 fixiert ist.

Zur Ausrichtung des Elements 42 wird der Steckerstift 4 zum optischen Koppeln des Lichtwellenleiterendes 6 mit dem optischen Element 42 in die Hülse 2 bis zum Anschlag 10 eingeführt, das bei Ansteuerung des Elements 42 (Laserdiode) über die Anschlüsse 43, 44 emittierte Licht in das Lichtwellenleiterende 6 eingekoppelt und hinsichtlich seiner Intensität am anderen Ende 48 des Lichtwellenleiters ausgewertet. Durch relatives Verschieben des Elements 42 in der Halterung 41 unter Auswertung der Intensitätsverhältnisse wird die optimale Kopplungs-Position bestimmt. In der optimalen Position wird der Klebstoff 47 durch Licht ausgehärtet. Dazu ist das Material 30 des Kopplungskörpers 50 zumindest im Bereich der Halterung 41 für dieses Licht durchlässig.

Axialbohrung 1 und Halterung 41 können vorzugsweise als einstückiger Körper 50 ausgebildet sein, so daß zur Vervollständigung der Kopplungsanordnung lediglich zwei weitere Einzelbauteile, nämlich die Hülse 2 und das elektrooptische Element 42, erforderlich sind. Dabei können die mechanischen und abrasiven Eigenschaften der Hülse 2 unabhängig von dem Körper 50 optimiert werden. Die Hülse ist in der Aufnahmebohrung 1 ohne zusätzliche Fixierungsmaßnahmen (Klebstoff) zur Erzielung einer reproduzierbaren Kopplungscharakteristik rein mechanisch gehalten.

## Patentansprüche

1. Kopplungsanordnung zum optischen Koppeln eines in einem Steckerstift (4) verlaufenden Lichtwellenleiterendes (5) mit einem optischen Element (42)
- mit einem Kopplungskörper (50) mit einer Axialbohrung (1) und darin aufgenommener Hülse (2), in die der Steckerstift (4) von dem ersten Hülsenende (3) her einführbar ist, und
- mit einer Halterung (41) für das optische Element (42)
**dadurch gekennzeichnet,**
- daß in die Axialbohrung (1) radial ein Anschlag (10) hineinragt, an dem das halterungsnahe zweite Hülsenende (12) anliegt,
- daß der Axialbohrungs-Querschnitt (14) im Einführbereich kleiner als der Hülsen-Querschnitt (16) bemessen ist und sich zum Anschlag (10) hin bis maximal auf den Hülsen-Querschnitt (16) erweitert und
- daß das die Axialbohrung (1) umgebende Material (30) beim Einführen der Hülse (2) elastisch aufweitbar ist.

2. Kopplungsanordnung nach Anspruch 1,
**dadurch gekennzeichnet, daß**
die Axialbohrung (1) im Einführbereich (15) radial nach innen gerichtete Rastnasen (22,23) aufweist, die das erste Hülsenende (3) in Richtung auf den Anschlag (10) mit einer Axialkraft beaufschlagen.

3. Kopplungsanordnung nach Anspruch 1 oder 2,
**dadurch gekennzeichnet, daß**
das die Axialbohrung (1) umgebende Material (30) mindestens einen im wesentlichen axial verlaufenden Schlitz (31,32,33) aufweist.

4. Kopplungsanordnung nach einem der vorangehenden Ansprüche,
**dadurch gekennzeichnet, daß**
das zweite Hülsenende (12) eine Fase (35) aufweist.

5. Kopplungsanordnung nach einem der Ansprüche 1 bis 4,
**dadurch gekennzeichnet, daß**
in die Halterung (41) ein lichtaushärtender Klebstoff (47) einbringbar ist und daß der Kopplungskörper (50) zumindest im Bereich der Halterung (41) für das zum Aushärten verwendete Licht durchlässig ist.

## Claims

1. Coupling arrangement for optically coupling an optical waveguide end (5), which extends in a plug pin (4), with an optical element (42)
- having a coupling body (50) with an axial bore (1) and a sleeve (2), which is accommodated therein and into which the plug pin (4) can be inserted from the first sleeve end (3), and
- having a holding support (41) for the optical element (42),
characterised
- in that projecting radially into the axial bore (1) there is a stop (10) against which rests the second sleeve end (12), which is close to the holding support,
- in that the axial-bore cross section (14) in the insertion area has smaller dimensions than the sleeve cross section (16) and is extended towards the stop (10) maximally to the extent of the cross section (16) of the sleeve, and
- in that the material (30), which surrounds the axial bore (1), can be elastically widened when inserting the sleeve (2).

2. Coupling arrangement according to claim 1, characterised in that the axial bore (1) has in the insertion area (15) stop lugs (22, 23) which are directed radially inwards and which apply an axial force to the first sleeve end (3) in the direction of the stop (10).

3. Coupling arrangement according to claim 1 or 2, characterised in that the material (30), which surrounds the axial bore (1), has at least one slot (31, 32, 33) extending in a substantially axial manner.

4. Coupling arrangement according to one of the preceding claims, characterised in that the second sleeve end (12) has a bevel (35).

5. Coupling arrangement according to one of the claims 1 to 4, characterised in that an adhesive (47), which hardens when exposed to light, can be introduced into the holding support (41) and in that the coupling body (50) at least in the area of the holding support (41) is permeable to the light which is used for hardening purposes.

## Revendications

1. Dispositif de couplage, pour le couplage optique à un élément (42) optique d'une extrémité (5) de guide d'ondes lumineuses qui s'étend dans une broche (4) mâle,
- comportant un élément (50) de couplage ayant un perçage (1) axial et une douille (2) qui y est reçue et dans laquelle la broche (4) mâle peut être introduite depuis la première extrémité (3) de la douille, et
- comportant une fixation (41) pour l'élément (42) optique,
caractérisé
- en ce qu'il fait saillie radialement dans le perçage (1) axial une butée (10), avec laquelle la deuxième extrémité (12) de la douille proche de la fixation est en contact,
- en ce que la section (14) transversale du perçage axial dans la zone d'introduction est prévue inférieure à la section (16) transversale de la douille et s'élargit en direction de la butée (10) au maximum à la section (16) transversale de la douille
- et en ce que le matériau (30) entourant le perçage (1) axial peut être élargi de manière élastique lors de l'introduction de la douille (2).

2. Dispositif de couplage suivant la revendication 1, caractérisé en ce que le perçage (1) axial comporte dans la zone d'introduction des becs (22, 23) d'encliquetage, qui sont dirigés radialement vers l'intérieur et qui soumettent la première extrémité (3) de la douille à une force axiale en direction de la butée (10).

3. Dispositif de couplage suivant la revendication 1 ou 2, caractérisé en ce que le matériau (30) entourant le perçage (1) axial comporte au moins une fente (31, 32, 33) s'étendant sensiblement dans la direction axiale.

4. Dispositif de couplage suivant l'une des revendications précédentes, caractérisé en ce que la deuxième extrémité (12) de la douille comporte un biseau (35).

5. Dispositif de couplage suivant l'une des revendications 1 à 4, caractérisé en ce que l'on peut introduire dans la fixation (41) une colle (47) qui durcit à la lumière et en ce que l'élément (50) de couplage est, au moins dans la région de la fixation (41), transparent à la lumière utilisée pour le durcissement.
